# FASCICULE DE BREVET EUROPEEN

(11) **EP 1 147 627 B1**
(45) Date de publication et mention de la délivrance du brevet: **13.08.2003**
(21) Numéro de dépôt: 00901687.4
(22) Date de dépôt: 01.02.2000
(51) Int. Cl.: H04B 7/24, G01S 5/14

(54) **SYSTEME DE TRANSMISSION DE SERVICES LIES A DES ZONES GEOGRAPHIQUES DE PERTINENCE ET RECEPTEUR PREVU POUR ETRE UTILISE AVEC LEDIT SYSTEME DE TRANSMISSION**
ÜBERTRAGUNGSANORDNUNG UND EMPFÄNGER DAZU FÜR DIENSTEN DIE AN RELEVANTEN GEOGRAPHISCHEN ZONEN GEBUNDEN SIND
SERVICE TRANSMISSION SYSTEM RELATED TO RELEVANT GEOGRAPHICAL ZONES AND RECEIVER DESIGNED TO BE USED WITH SAID TRANSMISSION SYSTEM

(30) Priorité: 02.02.1999 FR 9901412; 29.03.1999 FR 9904113
(43) Date de publication de la demande: 24.10.2001
(73) Titulaire: FRANCE TELECOM SA, 75015 Paris (FR); TELEDIFFUSION DE FRANCE S.A., 75015 Paris (FR)
(72) Inventeur: MAINARD, Laurent, F-35000 Rennes (FR); PERRAULT, Olivier, F-35530 Noyal S/Vilaine (FR)
(74) Mandataire: Maillet, Alain
(86) Numéro de dépôt international: FR0000224
(87) Numéro de publication internationale: WO00046939

(56) Documents cités:
- WO-A-96/07110
- US-A- 5 838 277

## Description

La présente invention concerne un système de transmission de services liés à des zones géographiques de pertinence ainsi qu'un récepteur prévu pour être utilisé avec ledit système de transmission.

Le domaine technique est celui de la transmission par des émetteurs installés dans des zones préétablies de contenus informatifs fortement liés à la localisation géographique desdites zones, et dont l'interprétation reste également liée à la localisation géographique des récepteurs les recevant. Par exemple, ces contenus informatifs peuvent être relatifs à un événement routier de type bouchon qui n'ont d'intérêt en général que s'ils en précisent la localisation et que si l'utilisateur final du récepteur peut facilement réaliser si cela concerne sa zone d'évolution ou non.

Le document WO-A-9 607 110 décrit p. ex. un système de transmision correspondant au préambule de la revendication 1 et aussi p. ex. un recepteur correspondant au préambule de la revendication 8.

On connaît déjà des services de diffusion de contenus informatifs relatifs au trafic routier qui sont actuellement disponibles en Europe ou en cours de normalisation. Dans le cas des services diffusés, un standard RDS/TMC sert de support à de tels services.

La commutation d'un service d'une première zone à celui d'une seconde zone se fait par la commutation de réception d'un émetteur de la première zone vers celle d'un émetteur de la seconde zone, commutation réalisée sur la base, d'une part, d'une information de localisation déduite d'un système de localisation, tel que le système de localisation global connu sous le nom de "GPS", et, d'autre part, d'informations concernant les limites géographiques précises des services qu'il peut être amené à recevoir. Ces dernières informations sont mises en mémoire de manière fixe dans le récepteur.

Ainsi, lorsqu'un véhicule quitte une première zone avec son récepteur réglé sur un émetteur qui diffuse des informations relatives à cette première zone et entre dans une seconde zone, le récepteur connaît les services auxquels il peut accéder et recherche alors, sur la fréquence d'un autre émetteur, les informations relatives à cette seconde zone.

Indépendamment des services à contenu géographique, des systèmes tels que celui qui est connu sous le nom de "DAB" (Digital Audio Broadcast) permettent de diffuser des informations précisant la localisation des émetteurs voisins et leur zone de couverture grossière modélisée par un simple rectangle, mais sans rapport précis avec la nature des contenus du ou des services diffusés.

L'inconvénient des procédés connus de transmission d'informations relatives à des zones de pertinence réside dans le fait qu'il n'est pas possible actuellement de transmettre de contenus informatifs relatifs à une zone précise de pertinence.

En effet, ou bien la transmission de cette zone est limitée à une estimation grossière de la zone de couverture d'un émetteur (indépendamment des contenus des services) pour permettre la commutation d'un émetteur à un autre, ou bien seule la portée globale du service est indiquée par un ou plusieurs paramètres régionaux grossiers ("national", "régional",...).

Un autre inconvénient réside dans le fait que les zones de pertinence et donc celles de commutation, sont stockées dans le récepteur sans pouvoir être téléchargées automatiquement, au gré des déplacements du récepteur et des informations qu'il reçoit. Il en résulte qu'il n'est donc pas possible de lancer un nouveau service exigeant des commutations précises à partir de services existants sans imposer une mise à jour des récepteurs.

Le but de la présente invention est de proposer un système de transmission de services qui ne présente pas les inconvénients de ceux décrits ci-dessus.

Pour ce faire, un système de transmission de services liés à des zones géographiques de pertinence selon l'invention est du type comportant au moins un système de transmission pour transmettre lesdits services dans lesdites zones, et un récepteur comportant une unité de réception prévue pour pouvoir recevoir lesdits services, une unité de localisation pour déterminer la position géographique dudit récepteur et une unité de commutation pour commuter ladite unité de réception pour qu'elle reçoit le ou les services liés à la ou aux zones de pertinence correspondant à la position géographique déterminée par ladite unité de localisation.

Il est caractérisé en ce que ledit ou chaque système de transmission transmet, en même temps que les services liés aux zones de pertinence recouvrant une partie de sa couverture, les descriptions des zones de pertinence et les adresses desdits services ainsi que les descriptions des zones de pertinence et les adresses des services des zones voisines desdites zones recouvrant ladite partie de sa couverture.

Selon une autre caractéristique de l'invention, au moins une zone géographique de pertinence parmi lesdites zones de pertinence est définie en recouvrement avec au moins une zone de pertinence voisine. Par exemple, chaque zone géographique de pertinence est définie par un ensemble de caractéristiques géométriques, avantageusement par un ensemble fermé de lignes définissant un ou plusieurs polygones. Ledit ou au moins un desdits polygones peut avoir au moins l'un de ses sommets sur des points d'axes routiers. Certaines zones de pertinence peuvent également être incluses strictement dans d'autres zones de pertinence.

Selon une autre caractéristique de l'invention, en plus de la description des zones de pertinences et des adresses desdits services, chaque système de transmission transmet une information optionnelle de densité d'informations et de qualité de service.

La présente invention concerne également un récepteur pour recevoir des services liés à des zones géographiques de pertinence et transmis par au moins un système de transmission. Ce récepteur est caractérisé en ce que ledit récepteur comprenant une unité de localisation pour déterminer la position géographique dudit récepteur, une unité de réception apte à recevoir en même temps que les services liés aux zones dans lesquelles il se trouve, les descriptions des zones de pertinence et les adresses desdits services ainsi que les descriptions des zones de pertinence et les adresses des services des zones voisines des zones sous sa couverture, et une unité de commutation prévue pour recevoir lesdites descriptions et pour commuter ladite unité de réception afin qu'elle reçoive le ou les services liés à la ou aux zones de pertinence correspondant à la position géographique déterminée par ladite unité de localisation.

Selon une autre caractéristique de l'invention, il comporte des moyens pour que l'utilisateur puisse déclarer son choix à l'unité de commutation, notamment lorsque la position géographique déterminée par ladite unité de localisation correspond aux limites d'une zone de pertinence incluse dans une ou plusieurs autres zones de pertinence.

Selon une autre caractéristique de l'invention, ledit récepteur est prévu pour recevoir qu'en plus de la description des zones de pertinence et des adresses desdits services, une information optionnelle de densité d'informations et de qualité de service. Il comporte alors des moyens pour que l'utilisateur puisse déclarer, à l'unité de commutation, un choix de densité d'informations et/ou de qualité de service de manière que ladite unité de commutation puisse commuter ladite unité de réception afin qu'elle reçoive le ou les services liés à la ou aux zones de pertinence dont la densité d'informations et/ou la qualité de services correspondent au choix dudit utilisateur.

Selon une autre caractéristique de l'invention, l'unité de localisation est dotée d'une fonction d'extrapolation permettant de connaître à chaque instant la position du véhicule en fonction des coordonnées précédemment enregistrées.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma d'un système de diffusion de services selon la présente invention, et
La Fig. 2 est un schéma synoptique d'un récepteur d'un système de diffusion de services selon la présente invention.

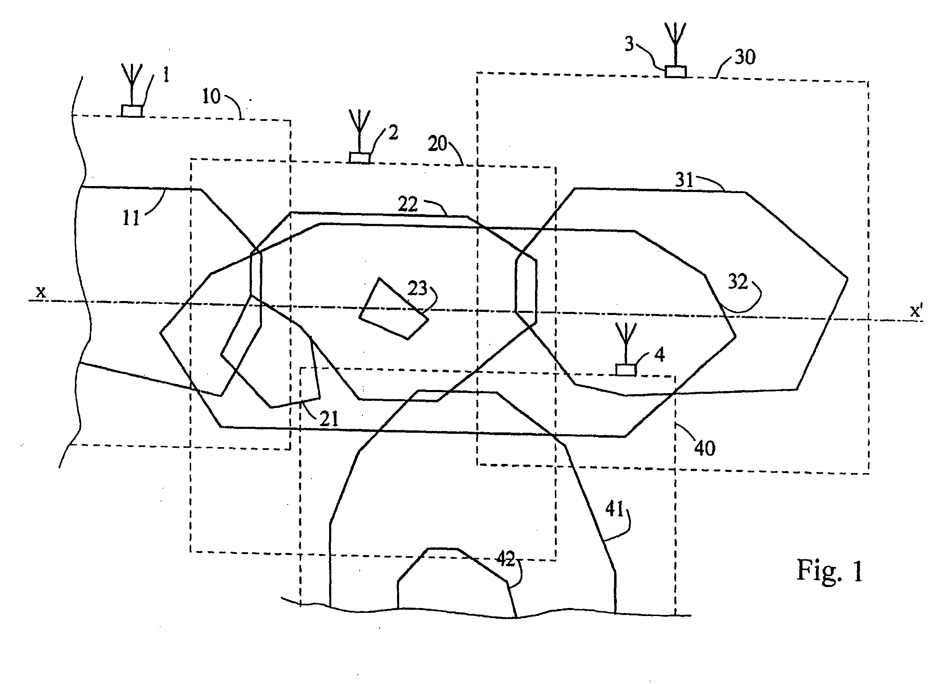

A la Fig. 1, on a représenté, en pointillés, les zones de couverture 10, 20, 30 et 40 de systèmes de transmission respectifs 1 à 4.

Le système de transmission 1 transmet un ou plusieurs services dont on voit sur la Fig. 1 la zone géographique de pertinence 11. On notera que plusieurs services peuvent être transmis avec une même zone géographique de pertinence. Le système de transmission 2 transmet des services dont les zones de pertinence sont les zones 21, 22 et 23. Le système de transmission 3 transmet au moins un service de zone de pertinence 31. Quant au système de transmission 4, il émet des services de zones de pertinence respectives 41 et 42.

Une zone de pertinence 32 est prévue pour au moins un service qui est transmis à la fois par les systèmes de transmission 1, 2, 3 et 4.

Dans la présente description, on utilise le terme "transmission" dans un sens large incluant la diffusion.

On comprendra qu'en dehors d'une zone de pertinence donnée, le ou les services qui sont liés à cette zone sont sans intérêt pour l'utilisatcur, parce qu'ils ne concernent pas cette zone. C'est le cas, par exemple, des services liés au trafic routier.

On remarquera que les zones géographiques de pertinence des services transmis par un système de transmission ne se trouvent pas nécessairement à l'intérieur de la zone de couverture dudit système de transmission. Sur la Fig. 1, ceci est pourtant le cas, (par exemple, la zone géographique de pertinence 31 est à l'intérieur de la zone de couverture 30 du système de transmission 3) à l'exception de la zone de pertinence 32.

Chaque zone géographique de pertinence est définie par une ou un ensemble de caractéristiques définissant une figure géométrique particulière, Il peut s'agir des caractéristiques définissant un ou un ensemble de cercles, une ou un ensemble d'ellipses, ou encore un ensemble de cercles, de lignes, d'ellipses, etc.

Avantageusement, au moins une ou chaque zone de pertinence est par exemple définie par un ensemble fermé de lignes définissant ainsi un ou plusieurs polygones.

Afin de faciliter la définition des polygones au moyen des coordonnées généralement utilisées dans la diffusion de services concernant le trafic routier, un polygone qui définit une zone géographique de pertinence a au moins l'un de ses somments qui se trouve sur des points d'axes routiers (borne kilométrique, péage routier, etc.).

Par ailleurs, pour permettre un temps de commutation de service, la définition des zones est telle que deux zones limitrophes peuvent se recouvrir.

Dans le cas de service à densité croissante, la définition des zones est telle que certaines zones, comme la zone 23 de la Fig. 1, sont incluses strictement à l'intérieur d'autres zoncs, en l'occurrence la zone 22.

En plus de la transmission des services des zones de pertinence couvertes par lui, chaque système de transmission 1 à 4 transmet les descriptions des zones de pertinence et les adresses desdits services ainsi que les descriptions des zones de pertinence et les adresses des services des zones voisines des zones sous sa couverture.

A ces descriptions, peuvent s'ajouter une information optionnelle de densité d'informations et une information de qualité de service.

Par exemple, à la Fig. 1, le système de transmission 2 transmet les services des zones de pertinence 21, 22 et 23 et 32, mais également les définitions de ces services, c'est-à-dire au moins la description des zones 21, 22 et 23 et 32 ainsi que les adresses desdits services correspondants. Mais, il transmet également les descriptions des zones de pertinence 11, 31, 41 et 42 ainsi que les adresses de services correspondants.

Par exemple, un service d'informations de trafic concernant la grande couronne de Paris est disponible sur un système de radiodiffusion numérique DAB. La définition de ce service est par exemple la définition d'une zone de pertinence constituée par l'intérieur d'une ligne polygonale reliant les barrières de péage des principales autoroutes quittant Paris et une adresse de service (la bande de fréquence et un numéro de service).

Un autre service d'informations de trafic est lié à l'autoroute A6 entre le péage de Fleury et Lyon sur un réseau FM synchrone. Ce service va intégrer une description de la zone de pertinence comme étant l'intérieur d'une ligne polygonale suivant les contours de l'A6 entre les deux points précédents et une adresse de service (par exemple la fréquence de modulation et un numéro de service).

Le cas de la zone 32 est par exemple celui d'une diffusion synchrone, c'est-à-dire de même fréquence le long du trajet, avec changement de systèmes de transmission mais sans commutation du récepteur.

Avantageusement, des zones de pertinence adjacentes sont en recouvrement. Par exemple, à la Fig. 1, la zone 22 est en recouvrement avec les zones 11 et 31.

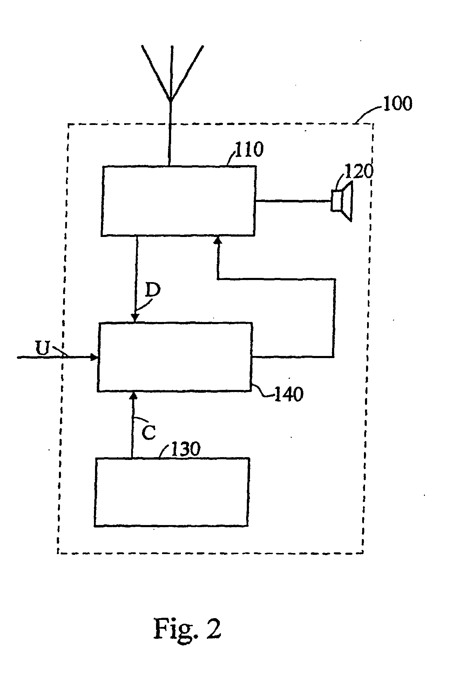

A la Fig. 2, on a représenté un récepteur 100 prévu pour la mise en oeuvre du procédé de l'invention. Il comporte, une unité de réception 110 destinée à recevoir les émissions des systèmes de transmission de services et à les reproduire par un moyen de reproduction 120, une unité de localisation 130 destinée à fournir les coordonnées C du véhicule à une unité de commutation 140. L'unité de réception 110 délivre également la description D des zones de pertinence à l'unité de commutation 140. Cette dernière, lorsque les coordonnées C délivrées par l'unité de localisation 130 correspondent aux limites d'une zone de pertinence définie dans le signal D, commute ladite unité de réception 110 pour la réception du service lié à cette zone de pertinence.

Lorsque les coordonnées délivrées par l'unité de localisation 130 correspondent aux limites d'une zone de pertinence incluse dans une ou plusieurs autres zones de pertinence, l'utilisateur peut agir sur l'unité de commutation (signal U) pour avoir le choix entre l'un ou l'autre de ces services.

Selon une variante, lorsque l'unité de réception 110 est prévue pour recevoir qu'en plus de la description des zones de pertinence et des adresses desdits services, une information optionnelle de densité d'informations et de qualité de service, l'utilisateur peut également agir sur l'unité de commutation pour lui déclarer un choix de densité d'informations et/ou de qualité de service de manière que ladite unité de commutation puisse commuter ladite unité de réception afin qu'elle reçoive le ou les services liés à la ou aux zones de pertinence dont la densité d'informations et/ou la qualité de services correspondent au choix dudit utilisateur. On notera que, dans la mesure où la zone de pertinence courante et la nouvelle zone de pertinence se chevauchent, l'instant de commutation peut être retardé de manière à ce qu'elle soit moins franche pour l'utilisateur.

Par ailleurs, si l'unité de localisation 130 délivre les coordonnées du véhicule à des intervalles de temps relativement distants les uns des autres, celle-ci pourrait être dotée d'une fonction d'extrapolation permettant de connaître à chaque instant la position du véhicule en fonction des coordonnées précédemment enregistrées.

A la Fig. 1, un utilisateur qui se déplace sur la ligne xx', reçoit l'émission du système de transmission 1 et, par conséquent, le ou les services dont la zone de pertinence est la zone 11. L'unité de réception 110 reçoit, non seulement la description de la zone 11 et du ou des services correspondant, mais également la description des zones 21, 22, 23 et 32 et des services correspondants.

A l'entrée dans la zone de pertinence 32, l'unité de réception 110 peut recevoir ou les services liés à la zone 11 ou ceux qui sont liés à la zone 32. C'est l'utilisateur qui fera le choix, soit directement, soit en précisant son critère de choix comme cela a été précédemment décrit.

A l'entrée dans la zone de pertinence 22, l'unité de commutation 140 commute l'unité de réception 110, d'une part, vers le système de transmission 2 et, d'autre part, vers le ou les services liés à la zone 22 ou la zone 32. Un retard de commutation peut avoir lieu.

Une fois sous la couverture de la zone 22 ou de la zone 32, l'unité de réception 110 reçoit le service correspondant à cette zone, la description de sa zone de pertinence 22, mais aussi la description des zones 21 et 23, si bien qu'à l'entrée dans la zone 23, l'unité de commutation 140 peut commuter l'unité de réception vers le service de la zone 23. Mais, comme cette zone 23 est incluse dans la zone 22, l'utilisateur peut intervenir pour faire connaître son choix.

Par exemple, la zone 22 définira un service « Bretagne » alors que la zone 23 incluse définira un service « Rennes » plus précis, plus riche, ou plus ciblé (temps de parcours, parkings de véhicules particuliers...).

On notera que, sous la couverture de la zone de pertinence 22, l'unité de réception 110 reçoit également la définition des services des, zones de pertinence 11, 21,31,41 et 42.

## Revendications

1. Système de transmission de services liés à des zones géographiques de pertinence, du type comportant au moins un système de transmission (1, 2, 3, 4) pour transmettre lesdits services dans lesdites zones de pertinence (11, 32 ; 21, 22, 23, 32; 31, 32; 41 ,42), et un récepteur (100) comportant une unité de réception (110) prévue pour pouvoir recevoir lesdits services, une unité de localisation (130) pour déterminer la position géographique dudit récepteur (100) et une unité de commutation (140) pour commuter ladite unité de réception (110) pour qu'elle reçoive le ou les services liés à la ou aux zones de pertinence correspondant à la position géographique déterminée par ladite unité de localisation (130), **caractérisé en ce que** ledit ou chaque système de transmission (1; 2; 3; 4) transmet, en même temps que les services liés aux zones de pertinence (11, 32 ; 21, 22, 23, 32; 31, 32; 41 ,42) recouvrant une partie de sa couverture, d'une pan, les descriptions desdites zones de pertinence (11, 32 ; 21, 22, 23, 32; 31, 32; 41 ,42) et les adresses desdits services liés aux dites zones de pertinence (11, 32 ; 21, 22, 23, 32; 31, 32; 41 ,42) et, d'autre pan, les descriptions et les adresses des services des zones de pertinence (21, 22, 23; 11, 31, 41, 42; 21, 22, 23, 41, 42; 21, 22, 23, 31) qui sont sous la couverture de zones de couverture (20; 10, 30, 40; 20, 40; 20, 30) voisines de sa couverture (10; 20; 30; 40).

2. Système de transmission de services selon la revendication 1, **caractérisé en ce qu**'au moins une zone géographique de pertinence parmi lesdites zones de pertinence est définie en recouvrement avec au moins une zone de pertinence voisine.

3. Système de transmission de services selon la revendication 1 ou 2, **caractérisé en ce que** chaque zone géographique de pertinence est définie par un ensemble de caractéristiques géométriques.

4. Système de transmission de services selon la revendication 3, **caractérisé en ce qu'**au moins une zone géographique de pertinence est définie par un ensemble fermé de lignes définissant un ou plusieurs polygones.

5. Système de transmission de services selon la revendication 4, **caractérisé en ce que** ledit ou au moins un desdits polygones a au moins l'un de ses sommets sur des points d'axes routiers.

6. Système de transmission de services selon une des revendications précédentes, **caractérisé en ce que** certaines zones de pertinence sont incluses strictement dans d'autres zones de pertinence.

7. Système de transmission de services selon une des revendications précédentes, **caractérisé en ce qu'**en plus de la description des zones de pertinence et des adresses desdits services, chaque système de transmission transmet une information optionnelle de densité d'informations et de qualité de service.

8. Récepteur pour recevoir des services liés à des zones géographiques de pertinence et transmis par au moins un système de transmission, **caractérisé en ce qu'**il comprend une unité de localisation (130) pour déterminer la position géographique dudit récepteur (100), une unité de réception (110) apte à recevoir en même temps que les services liés aux zones de pertinence de la zone de couverture dans laquelle il se trouve, les descriptions des zones de pertinence et les adresses desdits services ainsi que les descriptions des zones de pertinence et les adresses des services des zones de pertinence qui sont sous la zone de couverture de zones de couverture voisines de sa couverture et une unité de commutation (140) qui est prévue pour recevoir lesdites descriptions et pour commuter ladite unité de réception (110) afin qu'elle reçoive le ou les services liés à la ou aux zones de pertinence correspondant à la position géographique déterminée par ladite unité de localisation (130).

9. Récepteur selon la revendication 8, **caractérisé en ce qu'**il comporte des moyens pour que l'utilisateur puisse déclarer son choix à l'unité de commutation, notamment lorsque la position géographique déterminée par ladite unité de localisation (130) corresponde aux limites d'une zone de pertinence incluse dans une ou plusieurs autres zones de pertinence.

10. Récepteur selon la revendication 8 ou 9, **caractérisé en ce qu'**il est prévu pour recevoir qu'en plus de la description des zones de pertinence et des adresses desdits services, une information optionnelle de densité d'informations et de qualité de service et **en ce qu'**il comporte des moyens pour que l'utilisateur puisse déclarer, à l'unité de commutation, un choix de densité d'informations et/ou de qualité de service de manière que ladite unité de commutation puisse commuter ladite unité de réception afin qu'elle reçoive le ou les services liés à la ou aux zones de pertinence dont la densité d'informations et/ou la qualité de services correspondent au choix dudit utilisateur.

11. Récepteur selon la revendication 8, 9 ou 10, **caractérisé en ce que** l'unité de localisation (130) est dotée d'une fonction d'extrapolation permettant de connaître à chaque instant la position du véhicule en fonction des coordonnées précédemment enregistrées.

## Patentansprüche

1. Übertragungsanordnung für Dienste, die an relevante geografische Zonen gebunden sind, des Typs, der mindestens eine Übertragungsanordnung (1, 2, 3, 4) zum Übertragen der Dienste in die relevanten Zonen (11, 32; 21, 22, 23, 32; 31, 32; 41, 42) und einen Empfänger (100), der eine Empfangseinheit (110) umfasst, die dazu vorgesehen ist, die Dienste empfangen zu können, eine Lokalisierungseinheit (130) zum Bestimmen der geografischen Position des Empfängers (100) und eine Umschalteinheit (140) zum Umschalten der Empfangseinheit (110), damit sie den oder die Dienste empfängt, die an die relevante Zone oder Zonen gebunden sind, die der durch die Lokalisierungseinheit (130) bestimmten geografischen Position entspricht, **dadurch gekennzeichnet, dass** die oder jede Übertragungsanordnung (1; 2; 3; 4) gleichzeitig mit den an die relevanten Zonen gebundenen Diensten (11, 32; 21, 22, 23, 32; 31, 32; 41, 42), die einen Teil ihrer Deckung decken, einerseits die Beschreibungen der relevanten Zonen (11, 32; 21, 22, 23, 32; 31, 32; 41, 42) und die Adressen der Dienste, die an die relevanten Zonen (11, 32; 21, 22, 23, 32; 41, 42) gebunden sind, und andererseits die Beschreibungen und Adressen der Dienste der relevanten Zonen (21, 22, 23; 11, 31, 41, 42; 21, 22, 23, 41, 42; 21, 22, 23, 31), die unter der Deckung der Deckungszonen (20; 10, 30, 40; 20, 40; 20, 30), die mit ihrer Deckung (10; 20; 30; 40) benachbart sind, überträgt.

2. Übertragungsanordnung für Dienste nach Anspruch 1, **dadurch gekennzeichnet, dass** mindestens eine relevante geografische Zone unter den relevanten Zonen durch Überdecken mit mindestens einer benachbarten relevanten Zone definiert ist.

3. Übertragungsanordnung für Dienste nach Anspruch 1 oder 2, **dadurch gekennzeichnet, dass** jede relevante geografische Zone durch eine Einheit geometrischer Kenndaten definiert ist.

4. Übertragungsanordnung für Dienste nach Anspruch 3, **dadurch gekennzeichnet, dass** mindestens eine relevante geografische Zone von einer geschlossenen Einheit Linien definiert ist, die ein oder mehrere Vielecke definieren.

5. Übertragungsanordnung für Dienste nach Anspruch 4, **dadurch gekennzeichnet, dass** das oder mindestens eines der Vielecke mindestens einen seiner Gipfel auf Punkten von Verkehrsachsen hat.

6. Übertragungsanordnung für Dienste nach einem der vorhergehenden Ansprüche, **dadurch gekennzeichnet, dass** bestimmte relevante Zonen strikt in anderen relevanten Zonen eingeschlossen sind.

7. Übertragungsanordnung für Dienste nach einem der vorhergehenden Ansprüche, **dadurch gekennzeichnet, dass** zusätzlich zur Beschreibung der relevanten Zonen und der Adressen der Dienste jede Übertragungsanordnung eine optionale Information der Datendichte und Dienstqualität überträgt.

8. Empfanger zum Empfangen von Diensten, die an relevante geografische Zonen gebunden sind und von mindestens einer Übertragungsanordnung übertragen werden, **dadurch gekennzeichnet, dass** er eine Lokalisierungseinheit (130) umfasst, um die geografische Position des Empfängers (100) zu bestimmen, eine Empfangseinheit (110), die dazu geeignet ist, gleichzeitig mit den an die relevanten Zonen der Deckungszone, in der er sich befindet, gebundenen Diensten die Beschreibungen der relevanten Zonen und Adressen der Dienste sowie die Beschreibungen der relevanten Zonen und Adressen der Dienste der relevanten Zonen, die unter der Deckungszone der mit seiner Deckung benachbarten Deckungszonen sind, zu empfangen, und eine Umschalteinheit (140), die dazu vorgesehen ist, die Beschreibungen zu empfangen und die Empfangseinheit (110) umzuschalten, so dass sie den oder die Dienste empfängt, die an die relevante(n) Zone(n) gebunden sind, die der geografischen Position entspricht (entsprechen), die von der Lokalisierungseinheit (130) bestimmt wurde.

9. Empfänger nach Anspruch 8, **dadurch gekennzeichnet, dass** er Mittel umfasst, damit der Benutzer seine Auswahl der Umschalteinheit bekannt geben kann, insbesondere, wenn die von der Lokalisierungseinheit (130) bestimmte geografische Position den Grenzen einer relevanten Zone entspricht, die in einer oder mehreren relevanten Zonen eingeschlossen ist.

10. Empfänger nach Anspruch 8 oder 9, **dadurch gekennzeichnet, dass** er dazu vorgesehen ist, zusätzlich zur Beschreibung der relevanten Zonen und Adressen der Dienste eine optionale Informationen der Datendichte und Dienstqualität zu empfangen und dadurch, dass er Mittel umfasst, damit der Benutzer der Umschalteinheit eine Auswahl der Datendichte und/oder Dienstqualität so bekannt geben kann, dass die Umschalteinheit die Empfangseinheit umschalten kann, so dass sie den Dienst oder die Dienste empfängt, die an die relevante Zone oder relevanten Zonen gebunden sind, deren Datendichte und/oder Dienstqualität der Auswahl des Benutzers entsprechen.

11. Empfänger nach Anspruch 8, 9 oder 10, **dadurch gekennzeichnet, dass** die Lokalisierungseinheit (130) mit einer Funktion zum Extrapolieren versehen ist, die es erlaubt, jederzeit die Position des Fahrzeugs in Abhängigkeit von den zuvor aufgezeichneten Koordinaten zu kennen.

## Claims

1. Service transmission system linked to relevant geographical zones of the type consisting of at least one transmission system (1, 2, 3, 4) to transmit the said services in the said relevant zones (11, 32; 21, 22, 23, 32; 31, 32; 41, 42), and a receiver (100), consisting of a receiving unit (110) intended to be able to receive the said services, a localization unit (130) to determine the geographical position of the said receiver (100) and a switching unit (140) to switch the said receiving unit (110) so that it receives the service(s) linked to the corresponding relevant zone(s) at the geographic position established by the said localization unit (130), **characterised in that** the said or each transmission system (1; 2; 3; 4) transmits, at the same time as the services linked to the relevant zones (11, 32; 21, 22, 23, 32; 31, 32; 41, 42) overlapping one part of its cover, on the one hand, the descriptions of the said relevant zones (11, 32; 21, 22, 23, 32; 31, 32; 41, 42) and the addresses of the said services linked to the said relevant zones (11, 32; 21, 22, 23, 32; 31, 32; 41, 42) and, on the other hand, the descriptions and the addresses of the relevant zones (21, 22, 23; 11, 31, 41, 42; 21, 22, 23, 41, 42; 21, 22, 23, 31), which are covered by the covering zones (20; 10, 30, 40; 20, 40; 20, 30) in the neighbourhood of its cover (10; 20; 30; 40).

2. Service transmission system in accordance with claim 1, **characterised in that** at least one relevant geographical zone among the said relevant zones is defined as overlapping with at least one relevant neighbouring zone.

3. Service transmission system in accordance with claim 1 or 2 **characterised in that** each geographically relevant zone is defined by a collection of geometric characteristics.

4. Service transmission system in accordance with claim 3, **characterised in that** at least one geographically relevant zone is defined by a closed collection of lines defining one or more polygonal areas.

5. Service transmission system according to claim 4, **characterised in that** the said or at least one of the said polygons has at least one of its peaks on road axis points.

6. Service transmission system according to one of the preceding claims, **characterised in that** certain relevant zones are strictly enclosed within other relevant zones.

7. Service transmission system in accordance with one of the preceding claims, **characterised in that** as well as the description of the relevant zones and the addresses of the said services, each transmission system transmits optional information on the density of information and quality of service.

8. Receiver to receive services linked to relevant geographic zones and to transmit by at least one transmission system, **characterised in that** it includes a localization unit (130) to determine the geographic position of the said receiver (100), a receiving unit (110) capable of receiving, at the same time as services linked to the relevant zone of the covering zone in which it is located, the descriptions of the relevant zones and the addresses of the said services as well as the descriptions of the relevant zones and the addresses of the services of the relevant zones, which are covered by the neighbouring covering zones of its cover, and a switching unit (140) which is intended to receive the said descriptions and to switch the said reception unit (110) so that it receives the service(s) linked to the relevant zone(s) corresponding to the geographical position determined by the said localization unit (130).

9. Receiver in accordance with claim 8, **characterised in that** it includes the means for the user to be able to notify his/her choice to the switching unit, especially when the geographic position determined by the said localization unit (130) corresponds to the limits of a relevant zone included in one or more other relevant zones.

10. Receiver in accordance with claims 8 or 9, **characterised in that** it is intended to receive, as well as the description of the relevant zones and the addresses of the said services, optional information on the density of information and service quality and that it consists of the means in order for the user to be able to inform the switching unit of his/her choice of density of information and/or the service quality so that the said switching unit might switch the said receiving unit so as to receive the service(s) linked to the relevant zone(s) the density of information and/or the service quality of which corresponding to the choice of the said user.

11. Receiver according to claims 8, 9 or 10, **characterised in that** the localization unit (130) is equipped with an extrapolation function, enabling it to recognise at each instant, the position of the vehicle according to the previously registered coordinates.
